# EUROPÄISCHE PATENTSCHRIFT

(11) **EP 3 402 322 B1**
(45) Veröffentlichungstag und Bekanntmachung des Hinweises auf die Patenterteilung: **06.10.2021**
(21) Anmeldenummer: 17703657.1
(22) Anmeldetag: 13.01.2017
(51) Int. Cl.: A01K 1/01, A01K 1/02

(54) **STALL, INSBESONDERE FÜR DIE HALTUNG VON SCHWEINEN**
SHED, IN PARTICULAR FOR HOLDING PIGS
STALLE, EN PARTICULIER POUR CONTENIR DES PORCS

(30) Priorität: 13.01.2016 DE 102016000308
(43) Veröffentlichungstag der Anmeldung: 21.11.2018
(73) Patentinhaber: Big Dutchman International GmbH, 49377 Vechta (DE)
(72) Erfinder: REMMERT, Ralf, 16928 Neudorf (DE)
(74) Vertreter: Eisenführ Speiser
(86) Internationale Anmeldenummer: PCT/EP2017/050694
(87) Internationale Veröffentlichungsnummer: WO 2017/121864

(56) Entgegenhaltungen:
- US-A- 1 090 131
- US-A- 1 159 129
- US-A- 3 274 973
- US-A1- 2004 040 517

## Beschreibung

Die Erfindung betrifft einen Stall, insbesondere für die Haltung von Schweinen, mit einem Abkotbereich, sowie einem Ruhebereich, einem Fressplatzbereich und einem Aktivitätsbereich.

Es ist aus der DE 10 2011 101 089 bereits bekannt, einen Stall für die Haltung von Schweinen so auszubilden, dass den Tieren ein Aufenthaltsbereich, ein Liegebereich, welcher mit einem Einstreumaterial bedeckt ist, ein Abkotbereich und ein Fressplatzbereich zur Verfügung stehen. Eine derartige Gestaltung kommt bereits einer artgerechten Tierhaltung entgegen, zumal auch bereits ein Spaltenboden mit seiner die Klauen der Tiere schädigenden Wirkung vermieden wird. Der Betonboden des Liegebereiches weist hier eine Neigung hin zum Abkotbereich auf, so dass Einstreumaterial durch die Tret- und Wühlbewegungen der Schweine in Richtung Abkotbereich bewegt wird. Dort vermischt sich das Stroh mit den Exkrementen der Schweine zu einer Mischung, die als Mist bezeichnet wird. Dieser Mist wird regelmäßig mittels eines an einem Traktor montierten Schiebers entfernt und anschließend zu einem Lager verbracht. Da der Mist in erheblichen Mengen anfällt, bereitet seine Verwertung zur Entsorgung Probleme. Zudem werden Harn und Kot nicht getrennt und es entsteht hier, wie in allen herkömmlichen Stallanlagen bereits im Stall in erheblicher Konzentration Ammoniak, das die Gesundheit der Tiere und der dort tätigen Menschen schädigen kann.

Es ist in der PS DD 137 524 auch bereits beschrieben, auf einer Ebene unterhalb des Spaltenbodens eines Stalles den mittels einer mechanischen Räumvorrichtung abgeführten Harn und Kot in eine flüssige Phase und Dickstoff zu trennen und aus dem Stall abzuführen. Der Einsatz eines Spaltenbodens steht jedoch bekanntlich einer artgerechten Tierhaltung entgegen, da bekanntlich die Klauen der Tiere geschädigt werden.

Von der schwedischen Firma Moving Floor Gotland AB, Visby, wurde im Internet in YouTube unter der Bezeichnung "moving floor svin" auch bereits eine Stallanlage vorgestellt, bei der der Boden des Stalles von einem Förderband gebildet ist. Eine für eine artgerechte Tierhaltung vorteilhafte Unterteilung des Stalles in verschiedene Aufenthaltsbereiche ist nicht vorgesehen. Die Tiere verweilen ausschließlich auf dem den Stallboden bildenden Förderband, auf dem eine Durchmischung von Einstreumaterial mit Harn und Kot erfolgt.

Eine Trennung von Harn und Kot erfolgt auch hier nicht. Ein freier Auslauf und das Aufsuchen eines angenehmen Ruheplatzes sind für die Tiere nicht gegeben. Das Förderband mit den darauf befindlichen Tieren wird zudem zur Entfernung der Auflage in regelmäßen Abständen um ein kleines Teilstück vorwärts bewegt. Dieses führt zu einer ständigen nachteiligen Beunruhigung der Tiere, die keine Ausweichmöglichkeit haben. Ein asoziales Verhalten der Tiere und deren Aggressivität werden bestärkt.

US 1,090,131 offenbart Verbesserungen in einem Stall, wodurch er hygienischer wird als es normalerweise ohne zusätzliche Hilfe der Fall ist. US 1,159,129 offenbart eine Fördervorrichtung, die speziell für die Entmistung von Ställen ausgelegt ist. US 3,274,973 offenbart eine Umgebung für die Fütterung von Tieren und beinhaltet eine Bodenstruktur und Fütterungsverfahren.

Der Erfindung liegt die Aufgabe zugrunde, unter Vermeidung eines Spaltenbodens eine artgerechte Tierhaltung in der Form zu ermöglichen, dass den Tieren ein angenehmes Umfeld geboten wird. Insbesondere soll im Stall auch das Entstehen schädlicher Emissionen, insbesondere von Ammoniak, mittels einer effizienten Kot-Harn-Trennung vermieden werden. Mittels der Kot-Harn-Trennung soll zudem erreicht werden, dass eine Güllewirtschaft mit ihren Nachteilen entfällt.

Diese Aufgabe wird Z gemäß der in Anspruch 1 definierten Erfindung dadurch gelöst, dass der Boden des Abkotbereiches vom Obertrum eines Förderbandes gebildet ist, das für den anfallenden Harn durchlässig ist, dass unterhalb des Obertrums des Förderbandes eine Auffangwanne für den Harn angeordnet ist, aus der dieser abgeführt wird, und dass dem Förderband im Bereich seiner hinteren Umlenkung ein Kotabstreifer zugeordnet ist, bevorzugt dort an dem Förderband angeordnet, der bei dessen Vorschubbewegung den auf dem Förderband befindlichen Kot auf ein Abförderband abstreift, derart, dass eine Kot-Harn-Trennung erfolgt.

Das Förderband des erfindungsgemäßen Stalles ist ein durchgehendes Förderband, welches um vordere und hintere Umlenkrollen umläuft. Dieses Förderband kann mit Durchlässen versehen sein, die in das Material des Förderbandes eingebracht sind. Die Oberfläche des Förderbandes kann beispielsweise aus einem durchgehenden Elastomer gebildet sein. Das Förderband kann beispielsweise einen mit Fasern oder Litzen verstärktes Elastomer sein. Die Durchlässe können eingestanzt oder eingebohrt sein.

Bevorzugt ist das Förderband als Modulband ausgebildet und hat mehrere Gelenke miteinander verbundene Module. Die gelenkige Verbindung der Module erfolgt in einem Scharnierbereich.

Es hat sich gezeigt, dass der im Abkotbereich anfallende Harn bevorzugt vom Modulband über dessen Scharnierbereiche ohne Pfützenbildung in vorteilhafter Weise gut derart abfließen kann, dass er nur noch sehr geringe Anteile an fester organischer Substanz enthält. So können die einzelnen Module eine geschlossene, ebene Oberfläche aufweisen. Der beschriebene Effekt ist erreichbar, sofern beispielsweise ein Siegling Prolink Modulband mit der Typenbezeichnung S1-0 FLT zum Einsatz kommt. Eine geschlossene, ebene Oberfläche wird von den Tieren als angenehm empfunden. Die erreichbare dauerhaft gute Durchlässigkeit der Scharnierbereiche für den Harn erklärt sich daraus, dass insbesondere in den Umlenkbereichen eines Modulbandes im

Bereich der Spalten der Scharnierbereiche der Module eine Relativbewegung stattfindet, die einen ständigen Selbstreinigungseffekt in der Form zur Folge hat, dass feste Bestandteile sich nicht festsetzen können. Die Spalten der Scharnierbereiche bleiben für den Abfluss des Harnes offen. Dieses wird unterstützt durch die räumliche Trennung des Ruhebereiches, des Fressplatzbereiches und des Aktivitätsbereiches mit den Einstreumaterialien, wie beispielsweise Stroh und Strukturfutter vom Abkotbereich. Zudem hat die Trennung der Tiere von ihren Exkrementen große hygienische Vorteile. Das Wohlbefinden der Tiere und des Personals werden deutlich gesteigert.

Es könnten auch Module mit Abflussöffnungen eingesetzt werden. Dann ist jedoch im Bereich dieser Abflussöffnungen der beschriebene Selbstreinigungseffekt nicht gegeben. Zudem wären die Module, solange sich die Abflussöffnungen nicht zugesetzt haben, für einen unerwünschten höheren Anteil an Feststoffen im abfließenden Harn geöffnet.

In weiterer Ausgestaltung der Erfindung ist es vorgesehen, dass die Auffangwanne für den Harn ein Gefälle aufweist, dass dieser über eine Harnauffangrinne in einen vorzugsweise außerhalb des Stalles angeordneten Harnauffangbehälter geleitet wird, und dass das Abförderband quer zum Förderband verläuft und der Kot in einen vorzugsweise gleichfalls außerhalb des Stalles angeordneten Kotsammelbehälter gefördert wird.

Vorzugsweise ist es weiterhin vorgesehen, dass der Stall mehrere aneinander grenzende Stalleinheiten aufweist, die aus dem Abkotbereich, dem Ruhebereich, dem Fressplatzbereich und dem Aktivitätsbereich bestehen. Weiterhin ist es vorteilhaft, wenn die Abkotbereiche benachbarter Stalleinheiten derart aneinander grenzen, dass die Tiere benachbarter Schweinefamilien Sichtkontakt zu einander haben, d.h. zum Beispiel ein Gitter einen Sichtkontakt ermöglicht. So werden die Tiere zusätzlich zu ihrem natürlichen Reinhaltungsbedürfnis dazu animiert, den Abkotbereich aufzusuchen. Wie sich gezeigt hat, haben Tiere benachbarter Schweinefamilien bei Sichtkontakt das Bedürfnis, sich miteinander auszutauschen, d.h. zu verständigen, was dem Sozialverhalten der Tiere zuträglich ist.

Vorzugsweise wird das Förderband mittels eines Antriebsystems schrittweise angetrieben. Dabei weist das Antriebssystem vorteilhafter Weise einen mit Druckluft betriebenen Arbeitszylinder auf, dessen Kolbenstange auf einen Hebelarm einwirkt, der über einen Freilauf Antriebszahnräder des Förderbandes schrittweise antreibt. Ein Druckluftantrieb reduziert die elektrische Komponente des Bandantriebs, was die Gefahr eines elektrischen Kurzschlusses in der Anlage und damit eines Feuers im Stall verringert. Vorzugsweise ist es vorgesehen, dass das Antriebssystem des Förderbandes lastabhängig oder über Sensoren derart gesteuert ist, dass dieses gestoppt wird, sobald sich ein oder mehrere Schweine auf diesem befinden. So wird eine Beunruhigung der Tiere aufgrund einer Vorschubbewegung des Förderbandes vermieden.

Gegebenenfalls kann jedoch das Antriebssystem auch lastabhängig so ausgelegt sein, dass der Antrieb des Förderbandes fortlaufend erfolgt, sofern sich Ferkel auf dem Förderband, d.h. im Abkotbereich befinden, dass das Antriebssystem jedoch gestoppt wird, sobald ein heranwachsendes bzw. ausgewachsenes Schwein, dessen Gewicht einen festgelegten Richtwert übersteigt, das Förderband betritt. Wie es sich gezeigt hat, reagieren Ferkel im Abkotbereich aufgrund ihres ausgeprägten Spieltriebes auf Vorschubbewegungen des Förderbandes nicht negativ.

Die Umlenkungen des Förderbandes sind vorzugsweise von Seitenwänden des Abkotbereiches abgedeckt, derart, dass dieser Bereich des Förderbandes von den Tieren nicht betreten werden kann. Wie es sich gezeigt hat, ist es für die Akzeptanz und Prägung der Schweine auch von Vorteil, wenn das Förderband im Abkotbereich mittels einer Wassersprüheinrichtung bzw. mit einer Vernebelungseinrichtung befeuchtet wird. Das gleiche gilt für die Anordnung der Tränkeinrichtung an einer Seite des Abkotbereiches. Grundsätzlich ist es wichtig, dass die Stalleinheiten unter Verwendung von Minimaleinstreu oder auch wahlweise ohne Einstreu durch ihre Ausstattung den Tieren den Zweck der einzelnen Bereiche aufprägen. Der Ruhebereich muss einen hohen Liegekomfort bieten und darf nicht durch Störungen und Aktivitäten der Buchtengenossen missbraucht werden. Im Aktivitätsbereich wird zusätzlich zur Leistungsfütterung, die ausschließlich im Fressbereich angeboten wird, eine Strukturfütterung angeboten, die aus Beschäftigungsfuttermittel besteht, das Schweine sehr gerne fressen, kauen und untersuchen. Der Kotbereich muss am Rand der Stalleinheiten ausgebildet sein und weist vorzugsweise ein Gitter für einen Sichtkontakt zur Nachbarbucht auf.

Ein Ausführungsbeispiel der Erfindung ist in der Zeichnung dargestellt und wird im Folgenden näher beschrieben. Es zeigen:
- Fig.1: eine Stalleinheit eines Stalles in der Draufsicht.
- Fig. 2: einen Schnitt A-B durch die Stalleinheit gemäß Fig. 1.
- Fig. 3: eine Draufsicht auf einen Stall mit mehreren Stalleinheiten.
- Fig. 4: ein als Modulband ausgebildetes Förderband in vergrößerter Darstellung.
- Fig. 5: den Hebelarm des Antriebssystems mit Freilauf.

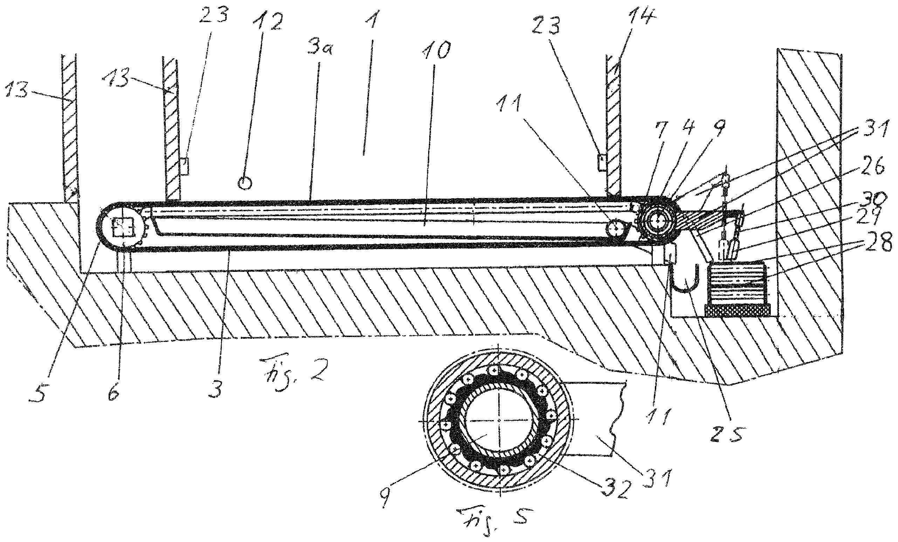

In der Zeichnung ist mit 1 ein Abkotbereich einer Stalleinheit 2, insbesondere für Schweine bezeichnet, in dem ein als Modulband ausgebildetes Förderband 3 angeordnet ist, dessen Obertrum 3a den Boden des Abkotbereiches bildet. Das Förderband 3 weist eine hintere Umlenkung 4 und eine vordere Umlenkung 5 auf. Wie aus der Figur 2 ersichtlich, sind im Bereich der Umlenkungen 4 und 5 für den Antrieb bzw. die Führung des Förderbandes 3 Zahnräder 6 und 7 auf je einer Achse 8 und 9 angeordnet.

Im Abkotbereich 1 ist unterhalb Obertrums 3a des Förderbandes 3 eine Auffangwanne 10 für den durch das Modulband hindurchtretenden Harn der Tiere angeordnet. Die Auffangwanne 10 weist ein Gefälle auf, derart, dass der Harn an einen Abfluss 11 geführt wird. Im Bereich des Abkotbereiches 1 ist zudem eine Wassersprüheinrichtung 12 angeordnet, mittels der das Förderband 3 in vorteilhafter Weise feucht gehalten werden kann.

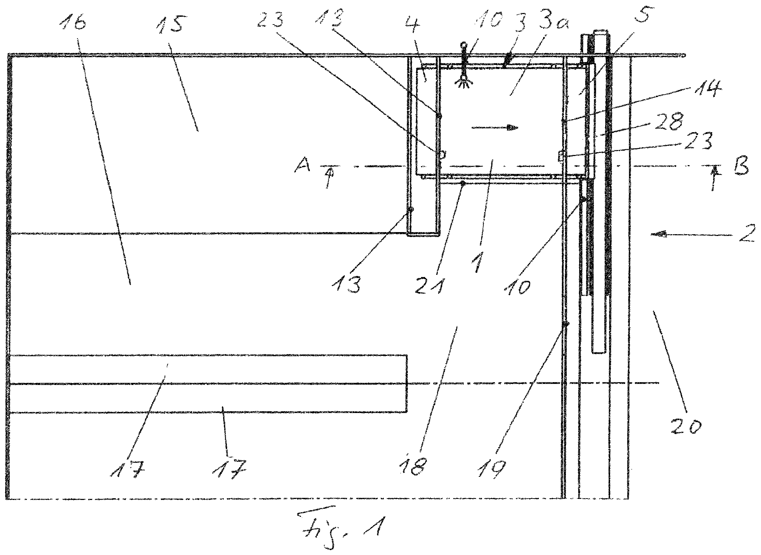

Aus den Figuren 1 und 2 der Zeichnung ist auch ersichtlich, dass im Bereich der Umlenkungen 4 und 5 des Förderbandes 3 Seitenwände 13 und 14 angeordnet sind, die verhindern, dass dieser Bereich des Förderbandes 3 von den Tieren betreten werden kann. Die Seitenwand 13 grenzt zudem den Abkotbereich 1 gegen einen benachbarten Ruhebereich 15 der Stalleinheit ab. Dieser sollte einen hohen Liegekomfort bieten und darf auch nicht durch Aktivitäten der Stallgenossen missbraucht werden. Der Boden des Ruhebereiches 15 besteht daher vorzugsweise aus einem von den Tieren als angenehm empfundenen Kautschukestrich bzw. weist einen Gummibelag auf.

Der Ruhebereich 15 grenzt an einen Fressbereich 16 mit einem Futtertrog 17 für die Leistungsfütterung. An den Fressbereich 16 schließt sich ein Aktivitätsbereich 18 an, in dem den Tieren eine Strukturfütterung angeboten wird, die Beschäftigungsfuttermittel enthält, die Schweine sehr gerne untersuchen, kauen und fressen. Aus dem Aktivitätsbereich 18 ist über einen Durchlass 19 auch ein Außenbereich 20 erreichbar. Vom Aktivitätsbereich 18 aus können die Tiere zum Abkoten das Förderband 3 des Abkotbereiches 1 über dessen offene Seite 21 betreten.

Das als Modulband ausgebildete Förderband 3 fördert auf seinem Obertrum 3a den hier angelegten Kot, aus dem der Harn weitgehend abgetropft ist, schrittweise in einen Kotauffangbereich. Gemäß dem Ausführungsbeispiel an den Seitenwänden 13 und 14 angeordnete Sensoren 23 verhindern dabei ein Anlaufen des Förderbandes 3 bzw. stoppen dessen Antriebssystem 24, sofern sich ein Tier auf diesem befindet. Alternativ kann ein Antriebssystem 24 auch derart gestaltet sein, dass der Vorschub des Förderbandes 3 lastabhängig erfolgt.

Der in die Auffangwanne 10 abgetropfte Harn fließt aufgrund des Gefälles seitlich aus dem Bereich des Förderbandes heraus, über den Abfluss 11 in eine durch den Stall geführte Harnauffangrinne 25 und dann in einen in der Zeichnung nicht dargestellten, außerhalb des Stalles angeordneten Harnauffangbehälter.

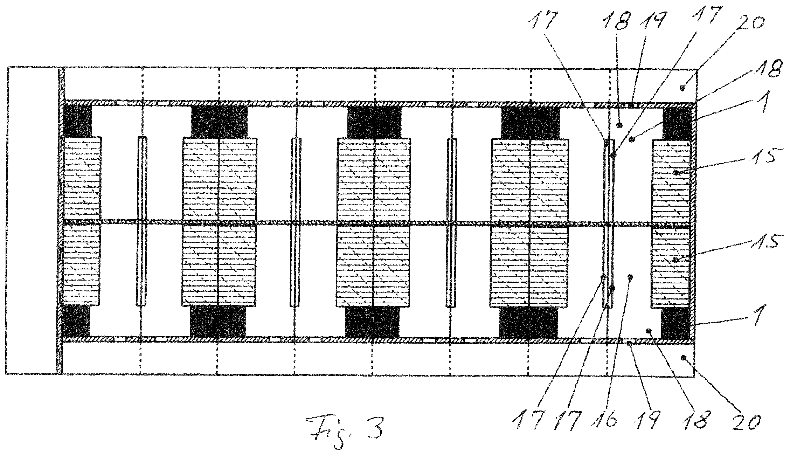

Im Bereich der hinteren Umlenkung 4 ist ein auf dem Förderband 3 aufliegender Kotabstreifer 26 angeordnet, der während des Vorschubs den abgelegten Kot, aus dem der Harn weitgehend abgetropft ist, auf ein quer zum Förderband 3 verlaufendes Abförderband 28. Dieses Abförderband 28 fördert den Kot in einen außerhalb des Stalles angeordneten, in der Zeichnung nicht dargestellten Kotsammelbehälter für die weitere Verwertung. Wie aus den Figuren 2 und 3 ersichtlich, kann das Antriebssystem 24 des Förderbandes 3 einen Druckluftzylinder 29 aufweisen, dessen in der Zeichnung nicht dargestellter Kolben, dessen Kolbenstange 30 an einen Hebelarm 31 geführt ist. Zum Vorschub des Förderbandes 3 wird der Druckluftzylinder 29 derart beaufschlagt, dass der an der antriebsseitigen Achse 9 angreifende Hebelarm 31 aufwärts bewegt wird. Dabei nimmt die Achse 9 das am Förderband 3 angreifende Zahnrad 7 zu dessen schrittweisen Vorschub mit. Da der Hebelarm 31, wie aus Figur 5 ersichtlich, mit dem Zahnrad 7 über einen Freilauf 31 in Wirkverbindung steht, erfolgt bei einer sich an- schließenden Abwärtsbewegung des Hebelarms kein Antrieb des Zahnrades 7, d.h. des Förderbandes 3.

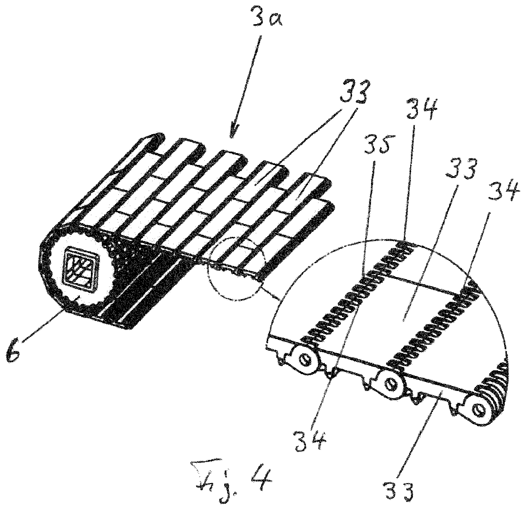

Aus der Figur 4, in der ein Abschnitt des als Modulband ausgebildeten Förderbandes 3 dargestellt ist, ist ersichtlich, dass zwischen dessen eine geschlossene Oberfläche aufweisenden Modulen 33 im Bereich von Scharnierbereichen 35 eine Vielzahl von Spalten 34 ausgebildet ist, über die erfindungsgemäß der Harn vom Obertrum 3a des Förderbandes 3 abfließt. Hierbei wird ein sich aus den Umlenkbewegungen des Förderbandes 3 ergebender Selbstreinigungseffekt der Spalten 34 genutzt.

Wie aus der Figur 3 ersichtlich ist, sind in der Regel in einem Stall mehrere erfindungsgemäße Stalleinheiten 2, bestehend aus dem Abkotbereich 1, dem Ruhebereich 15, dem Fressplatzbereich 16 und dem Aktivitätsbereich 18, zu einer Einheit zusammengefasst. Die Trennwände zwischen den Stalleinheiten 2 sind dann vorzugsweise nur so hoch, dass ein Sichtkontakt benachbarter Schweinefamilien möglich, ein Übersteigen jedoch nicht möglich ist. Tiere benachbarter Schweinefamilien können sich so unter Sichtkontakt miteinander austauschen, d.h. verständigen, was dem Sozialverhalten zugutekommt.

Die Harnauffangrinne 25 durchläuft hier vorteilhafterweise jeweils den gesamten Stall. Desgleichen durchläuft das Abförderband 28 für den Kot den gesamten Stall. Kot und Harn gelangen so zur Verwertung nach außerhalb der Stalleinheiten 2. Durch die sofortige Trennung von Kot und Harn entsteht im Stall kein Ammoniak. Es stinkt nicht mehr, teure Abluftfilter können daher entfallen. Die Kot-Harn-Trennung ermöglicht es zudem, dass die Festfraktion als Grunddünger im Ackerbau eingesetzt werden kann und, dass der weitgehend von Feststoffen befreite Harn sich zur Kultursteuerung eignet. Eine Güllewirtschaft mit den bekannten Nachteilen entfällt.

### Bezugszeichenliste:

- 1.: Abkotbereich
- 2.: Stalleinheit
- 3.: Förderband 3a Obertrum
- 4.: hintere Umlenkung
- 5.: vordere Umlenkung
- 6.: Zahnrad
- 7.: Zahnrad angetrieben
- 8.: Achse
- 9.: Achse
- 10.: Auffangwanne
- 11.: Abfluss
- 12.: Wassersprüheinrichtung
- 13.: Seitenwand
- 14.: Seitenwand
- 15.: Ruhebereich
- 16.: Fressbereich
- 17.: Futtertrog
- 18.: Aktivitätsbereich
- 19.: Durchlass
- 20.: Außenbereich
- 21.: offene Seite Abkotbereich
- 22.: Sensoren
- 23.: Antriebssystem
- 24.: Harnauffangrinne
- 25.: Kotabstreifer
- 26.: Abförderband
- 27.: Druckluftzylinder
- 28.: Kolbenstange
- 29.: Hebelarm
- 30.: Freilauf
- 31.: Modul
- 32.: Spalte
- 33.: Scharnierbereiche

## Patentansprüche

1. Stall, insbesondere für die Haltung von Schweinen mit einem Abkotbereich (1), mit einem Förderband (3) umfassend eine hintere Umlenkung (4) und mit einer Auffangwanne (10), wobei
- der Boden des Abkotbereiches (1) vom Obertrum (3a) des Förderbandes (3) gebildet ist, das für anfallenden Harn durchlässig ist, wobei unterhalb des Obertrums (3a) und oberhalb des Untertrums des Förderbandes (3) die Auffangwanne (10) für den Harn angeordnet ist, aus der dieser abgeführt wird,
- und dem Förderband (3) im Bereich seiner hinteren Umlenkung (4) ein Kotabstreifer (26) zugeordnet ist, der bei dessen Vorschubbewegung den auf dem Förderband (3) befindlichen Kot auf ein Abförderband (28) abstreift, derart, dass eine Kot- Harn-Trennung erfolgt,
**dadurch gekennzeichnet,**
- **dass** die Auffangwanne (10) ein durchgängiges Gefälle in Richtung der hinteren Umlenkung (4) aufweist.

2. Stall nach Anspruch 1, **dadurch gekennzeichnet, dass** das Förderband als Modulband (3) ausgebildet ist, das aus mehreren, gelenkig verbundenen Modulen (33) zusammengesetzt ist, zwischen denen für den anfallenden Harn durchlässige Spalten (34) vorgesehen sind.

3. Stall nach Anspruch 2, **dadurch gekennzeichnet, dass** die Module (33) des Förderbandes (3) eine geschlossene, ebene Oberfläche aufweisen.

4. Stall nach einem oder mehreren der vorherigen Ansprüche, **dadurch gekennzeichnet, dass** der Harn über eine Harnauffangrinne (25) in einen vorzugsweise außerhalb des Stalles angeordneten Harnauffangbehälter geleitet wird, und dass das Abförderband (28) quer zum Förderband (3) verläuft und den Kot in einen vorzugsweise gleichfalls außerhalb des Stalles angeordneten Kotsammelbehälter fördert.

5. Stall nach einem oder mehreren der vorherigen Ansprüche, **gekennzeichnet durch** einen Ruhebereich (15), einen Fressbereich (16) und einen Aktivitätsbereich (18).

6. Stall nach Anspruch 5, **gekennzeichnet durch** mehrere aneinander grenzende Stalleinheiten (2), die aus dem Abkotbereich (1), dem Ruhebereich (15), dem Fressbereich (16) und dem Aktivitätsbereich (18) bestehen, wobei die Tiere in den Abkotbereichen (1) Sichtkontakt zueinander haben.

7. Stall nach den Anspruch 4, **dadurch gekennzeichnet, dass** die Harnauffangrinne (25) ausgebildet ist aus den Abkotbereichen (1) nebeneinander liegender Stalleinheiten (2) des Stalles den Harn abzuleiten und das Abförderband (28) ausgebildet ist, den Kot abzuführen.

8. Stall nach einem oder mehreren der vorherigen Ansprüche, **dadurch gekennzeichnet, dass** das Förderband (3) mittels eines Antriebsystems (24) schrittweise angetrieben ist.

9. Stall nach Anspruch 8, **dadurch gekennzeichnet, dass** das Antriebssystem (24) einen mit Druckluft betriebenen Arbeitszylinder (29) aufweist, dessen Kolbenstange (30) auf einen Hebelarm (31) einwirkt, der über einen Freilauf (32) Zahnräder (7) des Förderbandes (3) schrittweise antreibt.

10. Stall nach den Anspruch 8 oder 9, **dadurch gekennzeichnet, dass** das Antriebssystem (24) des Förderbandes (3) lastabhängig oder über Sensoren (23) derart gesteuert ist, dass dieses gestoppt wird, sobald sich ein oder mehrere Schweine auf diesem befinden.

11. Stall nach einem der Ansprüche 8 bis 10, **dadurch gekennzeichnet, dass** das Antriebssystem (24) lastabhängig so ausgelegt ist, dass der Antrieb des Förderbandes (3) fortlaufend erfolgt, sofern sich Ferkel auf dem Förderband (3), d.h. im Abkotbereich (1) befinden, dass das Antriebssystem (24) jedoch gestoppt wird, sobald ein heranwachsendes bzw. ausgewachsenes Schwein, dessen Gewicht einen festgelegten Richtwert übersteigt, das Förderband (3) betritt.

12. Stall nach einem oder mehreren der vorherigen Ansprüche, **dadurch gekennzeichnet, dass** Umlenkungen (4, 5) des Förderbandes (3) von Seitenwänden (13, 14) des Abkotbereiches (1) abgedeckt sind, derart, dass ein Betreten dieser Bereiche des Förderbandes (3) verhindert wird.

## Claims

1. A Shed, in particular a pig shed, with a defecation region (1), with a conveyor belt (3) comprising a rear deflection (4) and with a collecting trough (10), wherein
- the floor of the defecation region (1) is formed by the upper run (3a) of the conveyor belt (3), through which urine that is produced can pass, wherein the collecting trough (10) for the urine is arranged under the upper run (3a) and above the lower run of the conveyor belt (3), from which collecting trough (10) the urine is guided away,
- and an excrement scraper (26) is assigned to the conveyor belt (3) in the region of the rear deflection (4) thereof, which excrement scraper (26), during the forward movement of the conveyor belt, scrapes the excrement on the conveyor belt (3) off onto a discharge conveyor belt (28), in such a way that a separation of excrement and urine takes place,
**characterized in that**,
- the collecting trough (10) has a continuous gradient in the direction of the rear deflection (4).

2. The shed as claimed in claim 1, **characterized in that** the conveyor belt is configured as a modular belt (3) which is composed of a plurality of articulated modules (33), between which gaps (34) are provided through which the urine that is produced can pass.

3. The shed as claimed in claim 2, **characterized in that** the modules (33) of the conveyor belt (3) have a closed, plane surface.

4. The shed as claimed in one or more of the preceding claims, **characterized in that** the urine is directed, via a urine collection channel (25), into a urine collection container preferably arranged outside the shed, and **in that** the discharge conveyor belt (28) extends transversely with respect to the conveyor belt (3) and conveys the excrement into an excrement collection container likewise preferably arranged outside the shed.

5. The shed as claimed in one or more of the preceding claims, **characterized by** a rest region (15), a feeding region (16) and an activity region (18).

6. The shed according to claim 5 , **characterized by** a plurality of adjoining shed units (2) consisting of the defecation region (1), the rest region (15), the feeding region (16) and the activity region (18), wherein the animals have visual contact with one another in the defecation regions (1).

7. The shed as claimed in claim 4, **characterized in that** the urine collection channel (25) is designed to lead urine away from the defecation region (1) of adjacent shed units (2) of the shed and the discharge conveyor belt (28) is designed to lead away the excrement.

8. The shed as claimed in one or more of the preceding claims, **characterized in that** the conveyor belt (3) is driven intermittently by means of a drive system (24).

9. The shed as claimed in claim 8, **characterized in that** the drive system (24) has a working cylinder (29) which is operated with compressed air and whose piston rod (30) acts on a lever arm (31) which, by way of a freewheel (32), intermittently drives toothed wheels (7) of the conveyor belt (3).

10. The shed as claimed in claim 8 or 9, **characterized in that** the drive system (24) of the conveyor belt (3) is controlled load-dependently or via sensors (23) in such a way that the conveyor belt (3) is stopped as soon as one or more pigs are located on it.

11. The shed as claimed in one of claims 8 through 10, **characterized in that** the drive system (24) has a load-dependent configuration, such that the drive of the conveyor belt (3) proceeds continuously as long as piglets are located on the conveyor belt (3), i.e. in the defecation region (1), but such that the drive system (24) is stopped as soon as an adolescent or adult pig whose weight exceeds a fixed value steps onto the conveyor belt (3).

12. The shed as claimed in one or more of the preceding claims, **characterized in that** deflections (4, 5) of the conveyor belt (3) are covered by side walls (13, 14) of the defecation region (1), in such a way that stepping onto these regions of the conveyor belt (3) is prevented.

## Revendications

1. Etable, en particulier pour l'élevage de porcs, avec une zone de défécation (1), avec une bande transporteuse (3) comprenant un élément de renvoi arrière (4) et avec une cuve de réception (10), dans laquelle
- le sol de la zone de défécation (1) est formé par la membrure supérieure (3a) de la bande transporteuse (3) qui est perméable à l'urine engendrée, dans laquelle la cuve de réception (10) pour l'urine, hors de laquelle celle-ci est évacuée, est disposée sous la membrure supérieure (3a) et au-dessus de la membrure inférieure de la bande transporteuse (3),
- et un racleur de fèces (26) est associé à la bande transporteuse (3) dans la zone de son élément de renvoi arrière (4), lequel racle, lors de son déplacement d'avancement, sur une bande d'évacuation (28) les fèces se trouvant sur la bande transporteuse (3) de telle manière qu'a lieu une séparation des fèces et de l'urine,
**caractérisée en ce**
- **que** la cuve de réception (10) présente une pente continue en direction de l'élément de renvoi arrière (4) .

2. Etable selon la revendication 1, **caractérisée en ce que** la bande transporteuse est réalisée en tant que bande modulaire (3) qui se compose de plusieurs modules (33) reliés de manière articulée, entre lesquels sont prévues des fentes (34) perméables à l'urine engendrée.

3. Etable selon la revendication 2, **caractérisée en ce que** les modules (33) de la bande transporteuse (3) présentent une surface plane fermée.

4. Etable selon l'une quelconque ou plusieurs des revendications précédentes, **caractérisée en ce que** l'urine est dirigée par l'intermédiaire d'une rigole de réception d'urine (25) dans un contenant de réception d'urine disposé de préférence à l'extérieur de l'étable, et que la bande transporteuse d'évacuation (28) s'étend de manière transversale par rapport à la bande transporteuse (3) et transporte les fèces dans un contenant de collecte de fèces disposé de préférence de la même manière à l'extérieur de l'étable.

5. Etable selon l'une quelconque ou plusieurs des revendications précédentes, **caractérisée par** une zone de repose (15), une zone d'alimentation (16) et une zone d'activité (18).

6. Etable selon la revendication 5, **caractérisée par** plusieurs unités d'étable (2) adjacentes les unes aux autres, qui sont constituées de la zone de défécation (1), de la zone de repos (15), de la zone d'alimentation (16) et de la zone d'activité (18), dans laquelle les animaux ont un contact visuel les uns par rapport aux autres dans les zones de défécation (1).

7. Etable selon la revendication 4, **caractérisée en ce que** la rigole de réception d'urine (25) est réalisée pour dévier l'urine hors des zones de défécation (1) d'unités d'étable (2) situées côte à côte de l'étable, et la bande transporteuse d'évacuation (28) est réalisée pour évacuer les fèces.

8. Etable selon l'une quelconque ou plusieurs des revendications précédentes, **caractérisée en ce que** la bande transporteuse (3) est entraînée progressivement au moyen d'un système d'entraînement (24).

9. Etable selon la revendication 8, **caractérisée en ce que** le système d'entraînement (24) présente un cylindre de travail (29) fonctionnant avec de l'air comprimé, dont la tige de piston (30) agit sur un bras de levier (31), qui entraîne progressivement des roues dentées (7) de la bande transporteuse (3) par l'intermédiaire d'une roue libre (32).

10. Etable selon la revendication 8 ou 9, **caractérisée en ce que** le système d'entraînement (24) de la bande transporteuse (3) est commandé en fonction de la charge ou par l'intermédiaire de capteurs (23) de telle manière que celui-ci est arrêté dès qu'un ou plusieurs porcs s'y trouvent.

11. Etable selon l'une quelconque des revendications 8 à 10, **caractérisée en ce que** le système d'entraînement (24) est conçu en fonction de la charge de telle sorte que l'entraînement de la bande transporteuse (3) est effectué en permanence dans la mesure où des porcelets se trouvent sur la bande transporteuse (3), en d'autres termes dans la zone de défécation (1), que le système d'entraînement (24) est toutefois arrêté dès qu'un porc en cours de croissance ou adulte, dont le poids dépasse une valeur de référence fixée, entre dans la bande transporteuse (3).

12. Etable selon l'une quelconque ou plusieurs des revendications précédentes, **caractérisée en ce que** des éléments de renvoi (4, 5) de la bande transporteuse (3) sont recouverts par des parois latérales (13, 14) de la zone de défécation (1) de telle manière qu'une entrée dans lesdites zones de la bande transporteuse (3) est empêchée.
